# EUROPEAN PATENT APPLICATION

(11) **EP 1 738 714 A2**
(43) Date of publication of application: **03.01.2007**
(21) Application number: 06000688.9
(22) Date of filing: 13.01.2006
(51) Int. Cl.: A61C 8/00

(54) **Dental prosthesis implant construction**

(30) Priority: 27.06.2005 IT MI20051207
(71) Applicant: Lorenzon, Giorgio, 10032 Brandizzo (Torino) (IT)
(72) Inventor: Lorenzon, Giorgio, 10032 Brandizzo (Torino) (IT)
(74) Representative: Cicogna, Franco

(57) **Abstract**

A dental prosthesis implant construction comprises an elongated prosthesis portion (503) coaxial with an axis (504) and including a first end adapted to provide a support for a dental prosthesis, a bracket (501) including a clamping element (505) supported by a second end of the elongated portion, and is characterized in that the clamping element comprises a safety device, designed for preventing damages susceptible to be caused by a contact with nervous beams included in an osseous portion the prosthesis construction is applied to.

## Description

### BACKGROUND OF THE INVENTION

The present invention relates to a dental prosthesis implant construction.

As is known, a conventional dental prosthesis screw assembly comprises a cylindric body, substantially threaded along its overall length and including an integral head portion, designed for providing a base or bottom for latching a dental prosthesis thereto.

For applying the above mentioned dental prosthesis screw, it is necessary to drill a hole in the osseous portion and thread the threaded cylindric body in said hole, by using a suitable threading tool, to be coupled to the head portion.

In particular, the above mentioned head portion is designed for coupling with a tubular element of the threading tool, which is rotatively driven, thereby turning said head portion and threading the threaded cylindric body in the hole formed in the bone.

In such an operation, as the screw is threaded to a substantial depth in the osseous portion, the end part of the cylindric body may contact a nerve included in an inner part of the bone, in particular the mandibular nerve, thereby seriously damaging the latter.

The damaging of said mandibular nerve can also be caused by a portion of the thread contacting said nerve and cutting it off.

Even if such a damage of the mandibular nerve would not involve a loss of operating functions, it could however cause a full or partial impairing of sensitivity properties of an user face portions, which represents a very serious drawback.

Accordingly, it would be advantageous to provide a dental prosthesis implant screw overcoming the above mentioned drawbacks of prior implant screws, and, in particular, preventing any damages of nervous parts included in osseous portions said screws are applied to.

Yet another prior dental prosthesis screw comprises a cylindric body including a first end threaded portion, to be clamped on an osseous portion, and a second end portion, designed for projecting from the osseous portion to provide a support base for clamping a dental prosthesis thereto.

For applying such a screw, it is necessary to drill a hole in the osseous portion and thread the threaded portion in said drilled hole, by using a suitable threading tool adapted to engage the second end portion.

To allow the threading tool to be easily coupled, the second end portion is conventionally made with an hexagonal head configuration, and is adapted to be coupled to a hexagonal tubular element of the threading tool.

This tubular element, in particular, is rotatively driven by turning the hexagonal head and threading the threaded portion in the hole made in the osseous part.

In some operations, the coupling of the tubular element to the hexagonal head could involve an undesired axial displacement or offset of said hexagonal element and hexagonal head, thereby the threading tool is of difficult operation.

Accordingly, it would be advantageous to provide a dental prosthesis implant screw allowing the threading tool to be easily and efficiently coupled, to provide an axially stable engagement of the implant screw head and hexagonal tubular element.

Also known is the fact that prior dental prosthesis brackets conventionally include an elongated body having a first threaded end portion to be clamped on an osseous portion and a second end portion designed to project from the osseous portion to provide a base for coupling a dental prosthesis thereto.

For applying said brackets, it is necessary to drill a hole in the osseous portion and thread the threaded portion in the drilled hole, by a suitable threading tool or instrument, designed for engaging the second end portion.

In some applications, the osseous portion designed for supporting the dental prosthesis has a very small size, thereby preventing a necessary hole from being properly drilled therein.

In other applications, the osseous portion to be drilled, while having a regular or normal size, has a very small width, for example since it is arranged between two adjoining teeth, thereby preventing a suitable hole from being easily made, or the threading tool from being easily used.

Accordingly, it would be advantageous to also provide a dental prosthesis implant bracket adapted to be assembled also on osseous portions of a comparatively small size, i.e. an osseous recesses of difficult access.

### SUMMARY OF THE INVENTION

Accordingly, the aim of the present invention is to provide such a dental prosthesis implant construction adapted to overcome the above mentioned drawbacks.

Within the scope of the above mentioned aim, a main object of the invention is to provide such an implant construction which can be easily installed, without any risks of damaging underlying gums.

A further object of the invention is to provide such a dental prosthesis implant construction which comprises safety means adapted to prevent any damages due to a contact with nervous beams included in an osseous portion the prosthesis construction must be applied to.

According to one aspect of the present invention, the above mentioned aim and objects, as well as yet other objects, which will become more apparent hereinafter, are achieved by a dental prosthesis implant construction comprising an elongated portion coaxial with an axis and including a first end adapted to provide a support for a dental prosthesis, a bracket comprising a clamping element supported by a second end of the elongated portion and being characterized in that said clamping element comprises safety means adapted to prevent any damages due to a contact with nervous beams included in an osseous portion said construction is applied to.

### BRIEF DESCRIPTION OF THE DRAWINGS

Further characteristics and advantages of the present invention will become more apparent hereinafter from the following detailed disclosure of a preferred, though not exclusive, embodiment of the invention, which is illustrated, by way of an indicative, but not limitative, example in the accompanying drawings, where:
Figure 1 shows a front view of an implant screw for a dental prosthesis according to the present invention;
Figure 2 shows the screw of figure 1, applied to an osseous portion;
Figure 3 is a further front view illustrating a dental prosthesis implant screw, according to a further aspect of the present invention;
Figure 4 shows a modified embodiment of the screw shown in figure 3;
Figure 5 shows the screw of figure 3, applied to an osseous portion;
Figure 6 is a front elevation view of an implant screw, according to a further aspect of the present invention;
Figure 7 is a schematic view showing the tip portion of the implant screw;
Figure 8 is a further front elevation view showing an implant screw, according to a further aspect of the present invention;
Figure 9 is a schematic view of the tip portion of the screw shown in figure 8;
Figure 10 is a further front elevation view of an implant screw, according to yet another aspect of the present invention;
Figure 11 is a schematic or detail view of the tip portion of the screw shown in figure 10;
Figure 12 is a further front view showing a dental prosthesis implant bracket according to the present invention;
Figure 13 is a cross-sectional view of the above implant bracket, substantially taken along the section plane XII-XII of figure 12;
Figure 14 is a bottom view showing the implant bracket of figure 12;
Figure 15 is a cross-sectional view, substantially taken through the section plane XV-XV of figure 12; and
Figure 16 shows the implant bracket of figure 12, applied to an osseous portion.

### DESCRIPTION OF THE PREFERRED EMBODIMENTS

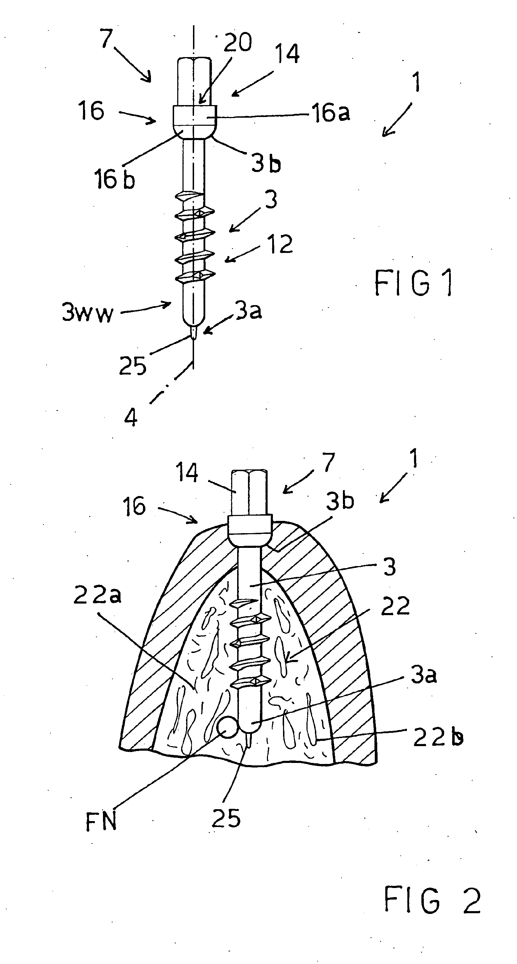

With reference to the number references of figures 1 and 2, a dental prosthesis implant screw, according to the present invention, generally indicated by the reference number 1, preferably made as a single-piece of a metal material, for example titanium, comprises an elongated cylindric portion 3, coaxial with an axis 4 and including a first end portion 3a, having the shape of a semispherical cup.

The screw 1 can have any desired size (diameter and length) and can be made of any materials also different from the above indicated material.

The elongated cylindric portion 3 integrally supports, at a second end portion 3b thereof, a head 7 designed for coupling to a rotary tubular element (not shown) of a threading tool or instrument, designed for causing the screw 1 to be turned about said axis 4.

A helical thread 12 extends along the side surface of the central portion of the cylindric part 3.

The head 7 further comprises an end clamping or latching element, having a hexagonal cross-section, 14, coaxial with said axis 4, and a middle element 16, or collet, coaxial with the axis 4 and arranged between the hexagonal element 14 and the second end portion 3b.

The middle element 16 has a diameter larger than the diameter of the cylindric portion 3, and comprises a substantially cylindric portion 16a, therefrom said hexagonal end element 14 coaxially extends, and a tapering portion 16b having a diameter decreasing toward the cylindric portion 3 and being laterally limited by an outward convex surface.

The end portion, of substantially cylindric shape, 16a, has a diameter which is also larger than the maximum diameter of the hexagonal latching or clamping element 14, so as to provide a shoulder 20 at a free edge of the middle element 16, facing the hexagonal element 14.

According to the present invention, said screw 1 further comprises a safety device, designed for preventing any possible damages due to a contact with nervous beams, in particular the mandibular nerve, included in the osseous portion, in which the screw will be applied.

In particular, said safety device comprises an apex probe 25, axially extending from the first end portion 3a and including a cylindric body having a very small diameter, for example corresponding to 1/5 of the diameter of said elongated cylindric portion 3.

The cylindric body 25, in particular, has a small length (of few millimeters) and comprises a rounded free end portion.

Said screw comprises moreover an unthreaded front end portion 3ww of the cylindric body 3, limited by a cylindric side surface.

The implant screw according to the present invention operates as follows.

To install or assemble said implant screw 1, a gum portion is drilled, to access an osseous portion 22, for example a mandibular portion as shown in figure 2, underlying it.

This osseous portion 22, in particular, has a substantially U-shape cross-section and comprises an outer cortical portion 22a and an inner portion 22b including a plurality of osseous trabeculae.

Actually, as is known, the mandibular bone can be considered equivalent to a box-like body having a perimetrical reinforced structure, including a plurality of thickened portion, the so-called mieloidal lines, having a trabecolated arrangement, similar to a well known honeycomb pattern.

Then, a hole 5 is drilled in the osseous portion 22, and the elongated cylindric portion 3 is engaged, for a length, in said hole.

Then, the tubular rotary element and head 7 are coupled, said head being turned, for example manually, to cause the screw 1 to turn about the axis 4 to be threaded in the hole drilled in the bone or osseous portion 22.

If the end portion 3a is frontward driven toward a nervous beam FN included in said osseous portion, then a possible contact of the screw 1 and nervous beam can occur, through the apical probe 25, which has a very small diameter and which accordingly, due to its small front surface, cannot substantially cut through said nervous beam FN.

On the contrary, said apical probe 25 can laterally displace said nervous beam FN without damaging it.

However the patient will anyhow sense a pain and will immediately signal this to the operating surgeon, to immediately stop to thread the implant screw 1.

If the end portion 3a is laterally driven toward a nervous beam FN included in the osseous portion 22, then the implant screw 1 will contact the nervous beam through its unthreaded portion 3ww (figure 2) without shearing the nervous beam.

Even in this case, the patient will signal the sensed pain to the surgeon to cause the latter to stop the threading of the screw 1, thereby preventing any threaded portion of the screw 1 from contacting the nervous beam FN.

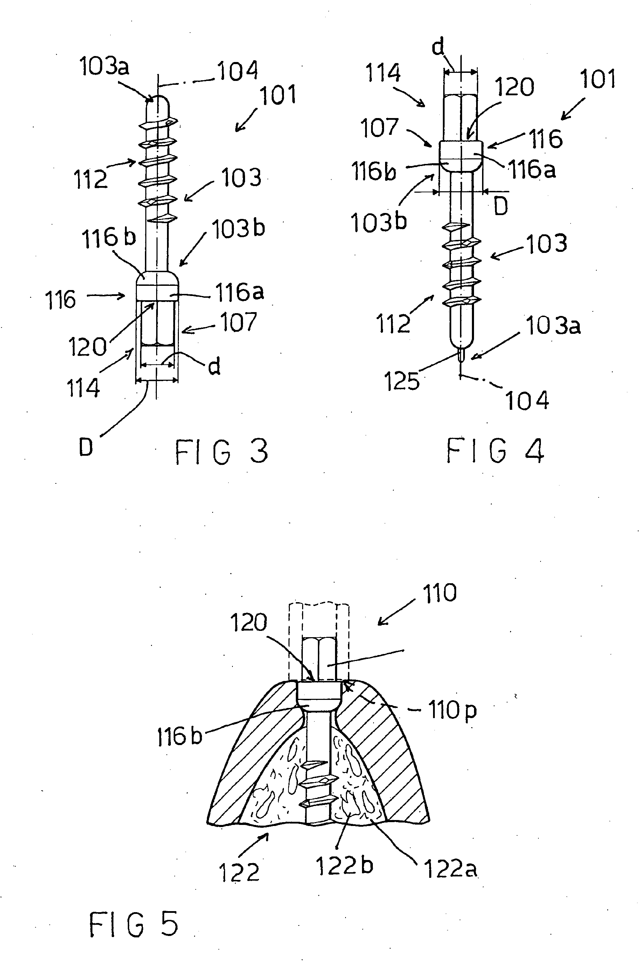

With reference to figures 3-5, a dental prosthesis implant screw according to a further aspect of the present invention, which has been generally indicated by the reference number 101, and being preferably made as a single piece of a metal material, for example titanium, comprises an elongated cylindric portion 103, coaxial with an axis 104 and including a first end 103a, having a substantially semi-spherical cup configuration.

The screw 101 can have any desired sizes (diameter and length) and can be made of a material different from the indicated materials.

The elongated cylindric portion 103 integrally bears, at a second end portion 103b thereof, a head 107 to be coupled to a tubular rotary element 110, shown in figure 5, of a threading tool (not shown) for causing the screw 101 to turn about said axis 104.

A helical thread 112 extends along the side surface of the cylindric portion 103, from the cup end portion 103a toward the head 107.

The head 107 comprises, in particular, and end latching or clamping element, of hexagonal cross-section 114, coaxial with said axis 104 and a middle element 116, or collet, coaxial with said axis 104 and arranged between the hexagonal element 114 and the second end portion 103b.

The middle element 116 has a diameter larger than the diameter of the cylindric portion 103 and comprises a substantially cylindrical portion 116a, therefrom said hexagonal end element 114 coaxially extends, and a tapering portion 116b having a diameter decreasing toward said cylindric portion 103 and being laterally limited by an outward convex surface.

The substantially cylindric end portion 116a has a diameter D, also larger than the maximum diameter of the hexagonal latching or clamping element 114, so as to define a shoulder 120 at a free edge portion of the middle element 116, facing said hexagonal element 114.

To install or assemble said implant screw 101, a gum portion is drilled, to access an osseous portion 122 (for example a mandibular portion) underlying it.

Said osseous portion 122 has a substantially U shape cross section 125 and comprises an outer cortical portion 122a and an inner portion 122b including a plurality of osseous trabeculae.

Then, the osseous portion 122 is drilled to form a hole therein, and an end portion of the elongated cylindric portion 103, including the threaded 112, is engaged in said hole.

Then, the rotary tubular element 110 and head 107 are coupled, by causing said hexagonal latching or clamping element 114 to be engaged in the cylindric cavity of the tubular element 110, to cause a peripheral edge portion 110p of the tubular element 110 to abut on the shoulder 120, thereby providing an axially stable position between the latching or clamping tubular element 110 and head 107.

Then, the tubular element 110 is rotatively driven, for example by a manual operation, to cause the screw 101 to turn about said axis 104 and to be threaded in said hole formed in said osseous portion 122.

The above disclosed axially stable coupling will allow the threading tool to be easily operated.

At the end of the screwing on of the screw 101, the tapering portion 116b can abut against the gum portion, which will be not damaged, due to the absence of sharpened points on the tapering portion 116b.

Modifications and variations can be carried out in the above disclosed and illustrated dental prosthesis implant screw, without, without departing from the scope of the invention.

For example, the modified embodiment shown in figure 4 comprises the same construction as the screw shown in figure 101 (like portions being accordingly indicated by like reference numbers) and comprises, in addition, an end probe 125, axially extending from the first end portion 103a and including a cylindric body having a smaller diameter, for example of 1/5 the diameter of the elongated cylindric portion 103.

The cylindric body 125 has a small length (few millimeters) and comprises a free round end portion.

The probe 125 operates as follows.

As the screw 101 is rotatively driven, as shown in figure 3, the end portion 103a could contact a nerve of the osseous portion 122, so as to seriously damage it.

The screw shown in figure 4, on the contrary, could contact a nerve at its end portion only by the end probe 125, which has a very small diameter and, accordingly, a very small front surface, thereby it cannot shear the nerve.

Thus, the probe 125 can only laterally displace the nerve without damaging it.

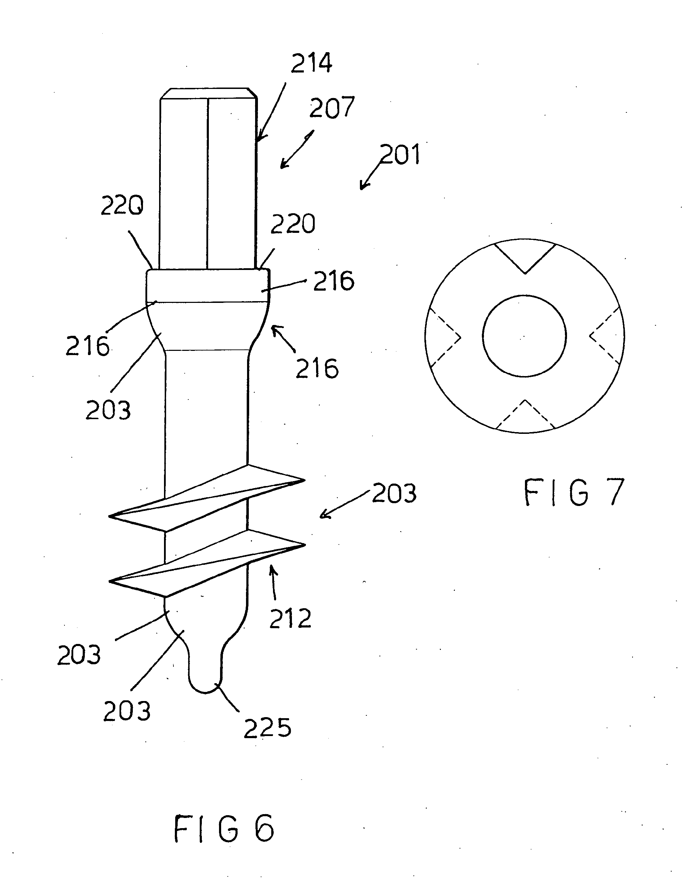

Figures 6 and 7 show an implant screw 201, according to a further aspect of the present invention, which comprises an elongated cylindric portion 203 bearing integrally, at a second end portion 203b thereof, a screw head 207 designed for coupling with a rotary tubular element of a threading tool, designed for turning, in operation, the screw 201 about its axis.

A helical thread 212 extends on the side surface of a central portion of the mentioned cylindric elongated portion 203.

The head 207 comprises an end latching or clamping element of hexagonal cross-section 214, coaxial with the axis of the screw, and a middle element 216, or collet, also coaxial with the screw axis and arranged between said hexagonal element 214 and second end portion 203b.

The middle element 216 has a diameter larger than the diameter of the cylindric elongated portion 203, and comprises a substantially cylindric portion 216a, therefrom coaxially extends the end hexagonal element 214 and a tapering portion 216b having a diameter which decreases toward said elongated cylindric portion 203 and being laterally limited by an outward convex surface.

The substantially cylindric end portion 216a has a diameter also larger than the maximum diameter of the latching or clamping hexagonal element 214, so as to define a shoulder 220 at a free edge portion of the middle element 216, facing the hexagonal element 214.

The implant screw 201 comprises moreover a safety device designed for preventing possible damages caused by a contact with nervous beams, in particular the mandibular nerve contained in the osseous portion the implant screw is applied to.

More specifically, the above safety device comprises an apex probe 225, axially extending from the first end portion 203a and including a cylindric body having a diameter less than the diameter of the said elongated cylindric portion 203.

The cylindric body 225 has a small length and a free rounded end portion.

The implant screw 201, in this embodiment, comprises an unthreaded front end portion 203ww of the cylindric body 203 and being limited by a side cylindric surface, having size smaller than that of the corresponding front end portion of the first embodiment as hereinabove disclosed.

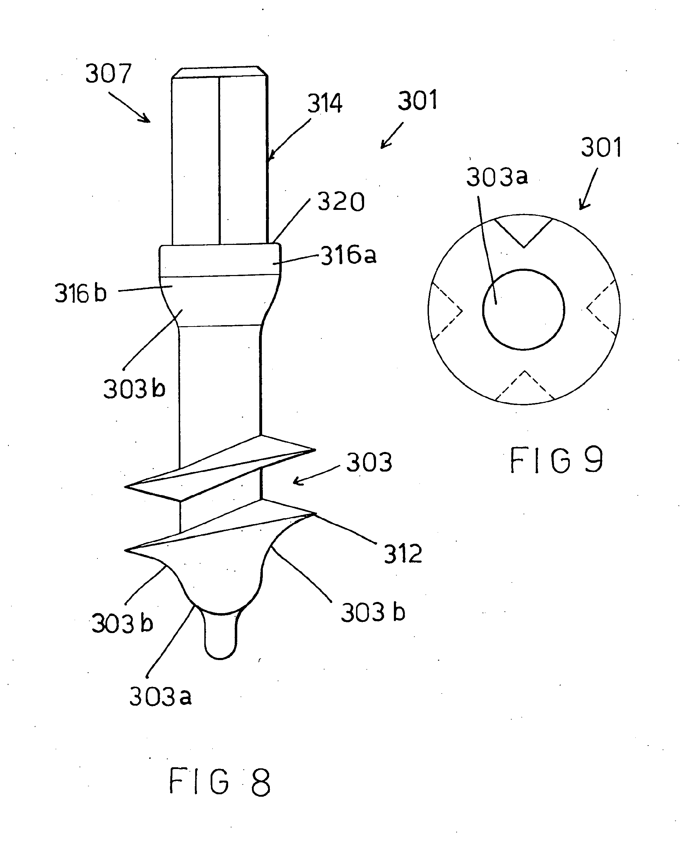

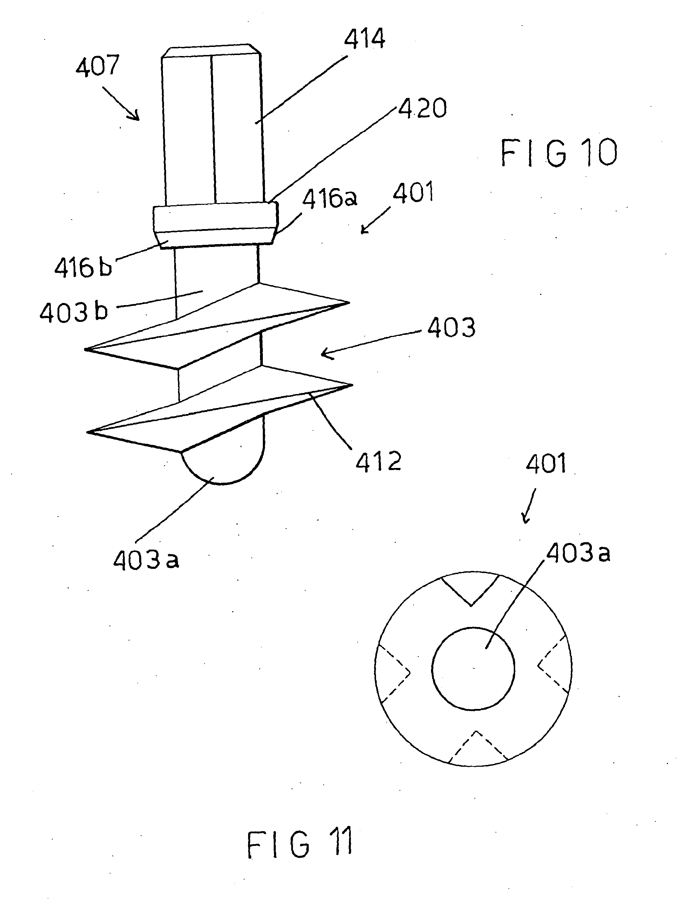

Figures 8 and 9 show an implant screw 301, according to a further aspect of the present invention, comprising an elongated cylindric portion 303 integrally bearing, at a second end portion 303b thereof, a screw head 307 designed for coupling with a tubular rotary element of a threading tool, designed for turning, in operation, said screw 301 to rotate about its axis.

A helical or coil thread 312 extends on the side surface of a central portion of the above mentioned cylindric portion 303.

The screw head 307 comprises an end latching or clamping element of hexagonal cross-section, 314, extending coaxially with the screw axis, and a middle element 316, or collet, also extending coaxially with the screw axis and arranged between said hexagonal element 314 and second end portion 303b.

The middle element 316 has a diameter larger than the diameter of the cylindric portion 303 and comprises a substantially cylindric portion 316a, therefrom coaxially extends the end hexagonal element 314 and a tapering portion 316b having a diameter which decreases toward the cylindric portion 303 and being laterally limited by an outward convex surface.

The substantially cylindric end portion 316a has a diameter which is also larger than the maximum diameter of the hexagonal clamping or latching element 314, thereby defining a shoulder 320 at a free edge portion of the middle element 316 facing said hexagonal element 314.

The implant screw 301 comprises a first end portion 303a, of semispherical cup shape, instead of the apex probe of the above disclosed embodiment.

The first end portion 303a meets with the cylindric body through an enlarged coupling portion 303b having a size similar to the diameter of the thread 312.

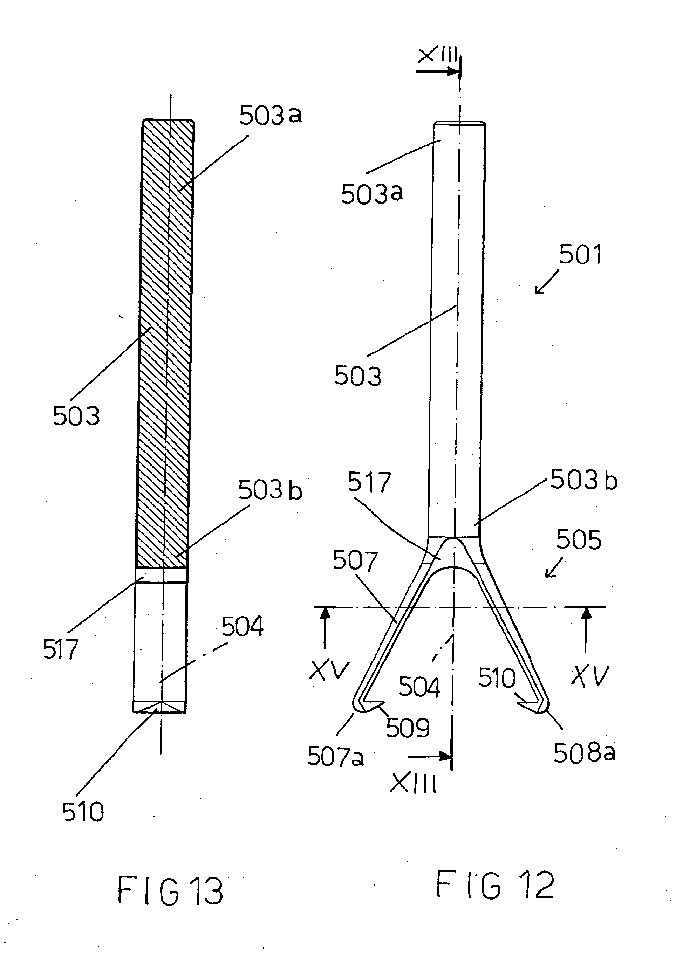

Figures 10 and 11 show an implant screw 401 according to a further aspect of the present invention, comprising an elongated cylindric portion 403 integrally bearing, at a second end portion 403b thereof, a screw head 407 designed for coupling with a tubular rotary element (not shown) of a threading tool, designed for causing, in operation, the screw 401 to rotate about its rotary axis.

A helical thread 412 extends on the side surface of a central portion of the above mentioned cylindric portion 403.

The screw head 407 comprises an end latching or clamping element of hexagonal cross-section, 414, extending coaxially with the screw axis, and a middle element 416, or collet, also coaxial with the screw axis and arranged between said hexagonal element 414 and second end portion 403b.

The middle element 416 has a diameter larger than the diameter of the cylindric portion 403 and comprises a substantially cylindric portion 416a therefrom coaxially extends said end hexagonal element 414 and a tapering portion 416b having a diameter which decreases toward the cylindric portion 403 and being laterally limited by an outward convex surface.

The above mentioned substantially cylindric end portion 416a has a diameter which is also larger than the maximum diameter of said hexagonal clamping or latching element 414, so as to define a shoulder 420 at a free edge portion of the middle element 416 facing the hexagonal element 414.

Said implant screw 401 comprises a first end portion 403a, of semispheric cup shape, instead of the apex probe of the first above disclosed embodiment.

Differently from the above disclosed embodiment, the first cup-shape end portion 403a is not coupled or mated to the helical thread 412 but comprises a diameter which is substantially identical to the diameter of the above mentioned elongated cylindric portion 403.

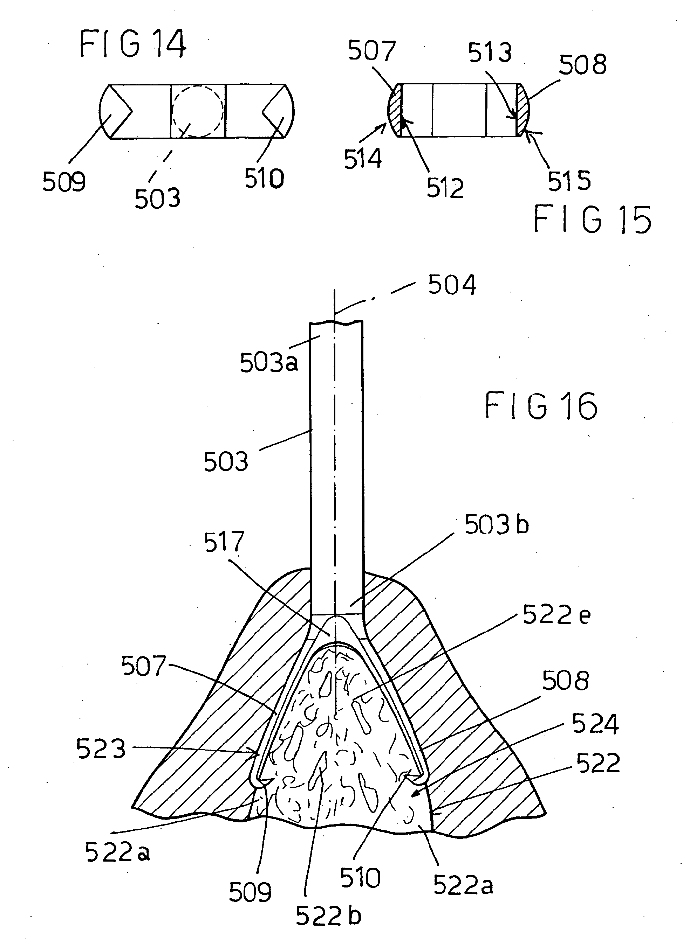

Figures 12 to 16 show a dental prosthesis implant bracket, generally indicated by the reference number 501, which is preferably made as a single piece from a metal material, for example titanium, and comprising an elongated cylindric portion 503 extending coaxially with an axis 504 and having a first end portion 503a adapted to provide a supporting bottom for a dental prosthesis of any desired known types.

More specifically, said bracket 501 comprises moreover a clamping or latching element 505, arranged at a second end portion 503b of the elongated portion 503 and including a first and second rectilinear arms 507, 508 extending integrally from the end portion 503b, on opposite sides of the axis 504, thereby providing a latching or clamping element having a substantially U or V shape.

Each arm 507, 508 bears, at a free end portion 507a, 508a thereof, an integral tooth element 509, 510 facing the axis 504 and having a triangular cross-section.

More specifically, said arms 507, 508 are limited, on the side thereof facing said axis 504, by respective flat surfaces 512, 513 and are limited, on the outwardly directed side thereof, by slightly curved surfaces 514 and 515.

The region of the arms 507, 508 joining the above mentioned elongated cylindric portion 503 meets with a curvilinear concave surface 517.

To mount said bracket 501, the osseous portion 522, for example a mandibular portion, is uncovered, by removing therefrom the covering gum portion.

As shown, the osseous portion 522 has a substantially U-shape cross section and comprises an outer cortex or cortical portion 522a and an inner portion 522b including a plurality of osseous trabeculae.

Then, the latching or clamping element 505 is arranged on the osseous portion 522, by causing the surface 517 to contact an end portion 522e of the osseous portion 522 and the arms 507 and 508 to contact opposite side walls 523, 524 of said osseous portion 522.

Said latching or clamping element 505 is then gripped by a gripping tool, for example a gripper, designed for being manually operated to bend the arms 507, 508 towards one another, and to cause the tooth element 509, 510 to enter the osseous portion 522.

At the end of this operation, the tooth elements 509, 510 will enter, for the overall length thereof, inside the cortical portion 522a, thereby the arms 507 and 508 will firmly bear on the walls 523, 524.

Thus, the partially deformed clamping element 505 will provide a stable anchoring on the osseous portion 522.

The clamping element 505, in particular, is covered by a repairing or recovering material, designed for allowing a new osseous tissue to be formed on the clamping element 505.

Then, the gum portion is re-located on the osseous portion 522 so as to cover said arms 507, 508 and the second end portion 507b.

At the end of the above mentioned operations, the elongated portion 3 will project from the gum part and can be used for assembling a dental prosthesis.

Then, the bracket 501 according to the invention is assembled on the osseous portion 522 without drilling a hole in said osseous portion.

Accordingly, the bracket 501 can also be assembled on a small size osseous portion and/or on an osseous portion difficult to be accessed.

It has been found that the invention fully achieves the above mentioned aim and objects.

In fact, the invention provides a dental prosthesis implant screw and bracket, which can be easily assembled, without damaging the underlying gum portion and including safety means adapted to prevent damages deriving from a possible contact with nervous beams included in an osseous portion the implant screw is applied to.

In practicing the invention, the used materials, as well as the contingent size and shapes, can be any, according to requirements.

## Claims

1. A dental prosthesis implant construction comprising an elongated portion coaxial with an axis and including a first end adapted to provide a support for a dental prosthesis, a bracket comprising a clamping element supported by a second end of the elongated portion and being **characterized in that** said clamping element comprises safety means adapted to prevent damages susceptible to be caused by a contact of nervous beams included in an osseous portion said construction is applied to.

2. An implant construction, according to claim 1, **characterized in that** said implant construction comprises an implant screw including an at least partially threaded elongated portion coaxial with an axis and having a first end portion and a second end portion integrally bearing a head.

3. An implant construction, according to claim 2, **characterized in that** said safety means comprise an apical probe extending axially from said end portion and including an elongated body having a diameter smaller than a diameter of said elongated portion.

4. An implant construction, according to claim 3, **characterized in that** said apical probe comprises a free rounded end portion.

5. An implant construction, according to claim 1, **characterized in that** said safety means comprise an unthreaded front end portion of said elongated body.

6. An implant construction, according to claim 5, **characterized in that** said head comprises an end clamping element, coaxial with said axis, and a middle element coaxial with said axis and arranged between said end clamping element and said second end portion.

7. An implant construction, according to claim 6, **characterized in that** said middle element has a diameter larger than a diameter of said elongated portion and comprises a substantially cylindric portion having an edge portion facing said end clamping element and defining a shoulder and a tapering portion, said tapering portion having a diameter decreasing from said shoulder toward said elongated portion and being laterally limited by an outward convex surface.

8. An implant construction, according to claim 1, **characterized in that** said implant construction comprises an implant screw having an at least partially threaded elongated portion, coaxial with an axis and including a first free end portion and a second end portion integrally bearing a head designed for coupling with a tubular rotary element of a threading tool adapted to cause, in operation, said screw to rotate about said axis, said head comprising an end clamping element coaxial with said axis and a middle element coaxial with said axis and arranged between said end clamping element and second end portion, said middle element defining a shoulder for an end edge portion of said tubular element, as coupled with said end clamping element.

9. An implant construction, according to claim 8, **characterized in that** said middle element has a diameter larger than the diameter of said elongated portion and comprising a substantially cylindric portion having an edge portion facing said end clamping element and defining said shoulder and a tapering portion having a diameter decreasing from said shoulder toward said elongated portion and being laterally limited by an outward convex surface.

10. An implant construction, according to claim 9, **characterized in that** said first end portion has a cup-shape configuration.

11. An implant construction, according to claim 10, **characterized in that** said end probe axially extends from said first end portion and comprises a cylindric body having a diameter smaller than said diameter of said elongated portion.

12. An implant construction, according to claim 11, **characterized in that** said cylindric body of said probe comprises a free rounded end portion.

13. An implant construction, according to claim 1, **characterized in that** said implant construction comprises an implant bracket having an elongated portion coaxial with an axis and including a first end portion providing a support for a dental prosthesis, said bracket comprising a clamping element supported by a second end portion of said elongated portion, said clamping element including a first and a second arm extending on opposite sides from said second end portion, with respect to said axis, thereby providing a substantially U or V-shape clamping element, said clamping element being adapted to be at least partially deformed to clamp said clamping element to an osseous portion.

14. An implant construction, according to claim 13, **characterized in that** each said arm bears, at a free end portion thereof, an integral tooth element facing said axis and adapted to enter said osseous portion.

15. An implant construction, according to claim 14, **characterized in that** said tooth element has a triangular cross section.

16. An implant construction, according to claim 15, **characterized in that** said arms are limited, on a side thereof facing said axis, by respective flat surfaces and, on an outward facing side thereof, by slightly curved surfaces.

17. An implant construction, according to claim 16, **characterized in that** said arms are joined by a joining region joining said arms with said elongated portion and being radiused by a curvilinear concave surface.

18. An implant construction, according to claim 17, **characterized in that** said elongated portion has a cylindrical shape.

19. An implant construction, according to claim 18, **characterized in that** said arms are made as a single piece with said elongated portion.

20. An implant construction, according to claim 1, **characterized in that** said elongated cylindric portion integrally bears, at a second end portion thereof, a head designed for coupling with a tubular rotary element of a threading tool designed for causing, in operation, said screw to turn about its axis; a helical thread extending on a side surface of a central portion of said cylindric portion, said head comprising an end clamping element, of hexagonal cross-section, coaxial with said axis of said screw, and a middle element, or collet, also coaxial with said axis of said screw and arranged between said hexagonal element and second end portion, said middle element having a diameter larger than the diameter of said cylindric portion, and comprising a substantially cylindric portion therefrom extends coaxially said end hexagonal element and a tapering portion having a diameter decreasing toward said cylindric portion and being laterally limited by an outward convex surface, said substantially cylindric end portion having a diameter larger than a maximum diameter of said hexagonal clamping element so as to define a shoulder at a free edge portion of said middle element facing said hexagonal element, said screw including moreover a safety device designed for preventing damages as caused by a contact against nervous beams, in particular a mandibular nerve, contained in an osseous portion on which said screw is applied, said safety device comprising an apical probe extending axially from said first end portion and including a cylindric body having a diameter less than the diameter of said elongated cylindric portion, said cylindric body having a short length and including a free rounded end portion, said cylindric body having an unthreaded front end portion limited by a small side cylindric surface, having a size smaller than a size of said front end portion.

21. An implant construction, according to claim 1, wherein said elongated cylindric portion integrally bears, at a second end portion thereof, a head for coupling with a tubular rotary element of a threading tool, designed for causing, in operation, said screw to rotate about its axis, a helical thread extending on the side surface of a central portion of said cylindric portion, said head including an end clamping element, of hexagonal cross-section, coaxial with the axis of said screw, and a middle element, or collet, also coaxial with said axis of said screw and arranged between said hexagonal element and second end portion, said middle element having a diameter larger than the diameter of said cylindric portion and comprising a substantially cylindric portion therefrom coaxially extends said end hexagonal element and a tapering portion having a diameter decreasing toward said cylindric portion and being laterally limited by an outward convex portion; said substantially cylindric end portion having a diameter larger than a maximum diameter of said hexagonal clamping element to define a shoulder at a free edge portion of said middle element facing said hexagonal element, and being **characterized in that** said first end portion has a semispheric cup shape and meets with said cylindric body through an enlarged mating portion having a size similar to a diameter of said thread.

22. An implant construction, according to Claim 1, wherein said elongated cylindric portion integrally bears, at a second end portion thereof, a head for coupling with a tubular rotary element of a threading tool designed for causing, in operation, said screw to rotate about its axis, a helical thread extending on the side surface of a central portion of said cylindric portion, said head comprising an end clamping element, of hexagonal cross-section, coaxial with said axis of said screw, and a middle element, or collet, also coaxial with said axis of said screw and arranged between said hexagonal element and second end portion, said middle element having a diameter larger than the diameter of said cylindric portion and comprising a substantially cylindric portion therefrom coaxially extends said end hexagonal element and a tapering portion having a diameter decreasing toward said substantially cylindric portion and laterally limited by an outward convex surface, said substantially cylindric portion having a diameter larger than a maximum diameter of said hexagonal clamping element to define a shoulder at a free edge portion of said middle element facing said hexagonal element, and being **characterized in that** said first cup-shape end portion is not mated to said helical thread, but has a diameter substantially identical to the diameter of said elongated cylindric portion.
